# EUROPEAN PATENT APPLICATION

(11) **EP 0 715 197 A2**
(43) Date of publication of application: **05.06.1996**
(21) Application number: 95308689.9
(22) Date of filing: 01.12.1995
(51) Int. Cl.: G02B 13/12, G02B 26/10, H04N 1/04

(54) **Anamorphic zoom lens system for controlling scan line spacing**

(30) Priority: 01.12.1994 US 357238
(71) Applicant: XEROX CORPORATION, Rochester New York 14644 (US)
(72) Inventor: Fisli, Tibor, Los Altos Hills, California 94022 (US)
(74) Representative: Goode, Ian Roy

(57) **Abstract**

A raster scanning optical system includes a plurality of laser sources (135,140) that emit laser beams, a rotating, reflective polygonal surface (120) that reflects the laser beams to form scan lines (155,160), and an anamorphic zoom system (200) positioned between the laser sources and the reflective surface, a focal length of the anamorphic zoom system being adjustable (203) to adjust separation of the scan lines. The light beams form focussed spots (125,130) on the reflective surface (120), the spots remaining focussed while the focal length of the anamorphic zoom system is adjusted to adjust positioning of the scan lines.

## Description

The invention relates to raster scanning optical systems, and more particularly, to raster scanning optical systems generating a plurality of scan lines whose spacing must be controlled accurately.

Flying spot scanners (often referred to as raster output scanners or ROSs) typically have a reflective multifaceted polygon mirror that is rotated about its central axis to repeatedly sweep one or more intensity modulated beams of light across a photosensitive recording medium in a line scanning direction (known as the fast-scan or tangential direction or meridian) while the recording medium is being advanced in an orthogonal, or "process" direction (known as the slow-scan or sagittal direction or meridian), such that the beams scan the recording medium in accordance with a raster scanning pattern. Digital printing is performed by serially intensity-modulating each of the beams in accordance with a binary sample string, whereby the recording medium is exposed to the image represented by the sample string as it is being scanned.

Conventional ROS systems also are suitable for deflecting multiple laser beams in single and multi-station printers. Printers that sweep several beams simultaneously are referred to as multi-beam or multispot printers. Multi-beam printer techniques are illustrated in US-A-4,474,422.

With such systems, two or more sources generate laser beams which encounter pre-polygon optics, which are deflected by a rotating polygon mirror, and which are focused using well known post-polygon optics to form scan lines on a photoreceptor. Such multispot printers simultaneously print two or more spots, one spot for each scan line, on the photoreceptor, yielding increased scanning speed over single-spot systems. Such multispot systems generally use interlacing techniques for properly imaging the plural light beams on the photoreceptor. For example, US-A-5,233,367 discloses one such multiple-beam interlacing scanning system.

With such conventional multispot systems, scan line separation must be controlled very precisely to achieve proper interlacing. Precise scan-line separation is required for noise-free printing. Under certain conditions, variations in scan-line separation of even less than 1 µm can be detected in the printed image.

Input optics sagittal magnification in multispot scanning systems is represented by the equation IOSM = (Is)(ilf)(psp)(ppm), where Is is separation of the laser sources, ilf is the interlace factor (a multiple of scan line separation, that is, a multiple of the pitch of the scan lines), psp is printing scan pitch (separation) and ppm is post-polygon magnification.

With a multispot ROS printing at 400 scan lines per inch (15.75 lines per mm), for example, the pitch or separation between scan lines is 1/400 inch, that is, 2.5 mil (63.5 µm). (A mil is one one-thousandth of an inch, or 25.4 µm.) For an interlace factor of 5, actual separation between scan lines is 5 x 2.5 mil, or 12.5 mil (317.5 µm). For a post-polygon magnification of 1 and a laser separation of 1 mil (25.4 µm), input optics sagittal magnification IOSM = (1)(5)(2.5)(1) = 12.5. In other words, the magnification from the lasers to the polygon is 12.5.

Multispot ROS systems typically include a collimator, which is a lens capable of collimating, that is, making parallel, transmitted light rays. To achieve an IOSM of 12.5, for a collimator having a focal length of 0.5 inch (12.7 mm), the elements of the input optics (typically cylindrical lens elements) must have a combined focal length that is 12.5 times greater than the focal length of the collimator. That is, the input optical elements must have a combined focal length of (12.5)(0.5) = 6.25 inches (158.7 mm). Even slight changes in the focal length of the collimator and/or the cylindrical lenses of the input optics can create unacceptable variations in scan line separation on the photoreceptor. For example, a standard manufacturing tolerance for collimators and cylindrical input optics lenses is 3%. A +3% variation in the focal length of a 0.5 inch collimator yields an actual focal length of (0.5)(1.03) = 0.515 inch (13.1 mm). A -3% variation in the combined focal length of the input optics cylindrical lenses yields an actual combined focal length of (6.25)(.97) = 6.062 inches (154.0 mm). These actual focal length values yield a magnification of 6.062/0.515, or 11.77, instead of the desired, previously described magnification of 12.5.

Even for an assumed perfect laser separation of 1 mil (25.4 µm), scan line separation at 11.77 times magnification is 11.77 mil, or 299 µm. At the desired 12.5 times magnification, scan line separation is 12.5 mil, or 317.5 µm. Thus, even for collimators and cylindrical lenses manufactured to within standard manufacturing tolerances, scan line separation error of 317.5 - 299 = 18.5 µm can occur. Additionally, perfect laser separation of 1 mil (25.4 µm) is difficult to achieve, adding to scan line separation error.

As described above, variations in scan-line separation of even less than 1 µm can be detected in a printed image, so 18.5 µm separation error is quite serious. In fact, 18.5 µm represents 29% of a 400 spi scan pitch ((18.5)/((2.5 mil)(25.4 µm/mil)) = .29). Thus, even minor variations in pre-polygon lenses, within manufacturing tolerances, can significantly diminish print quality.

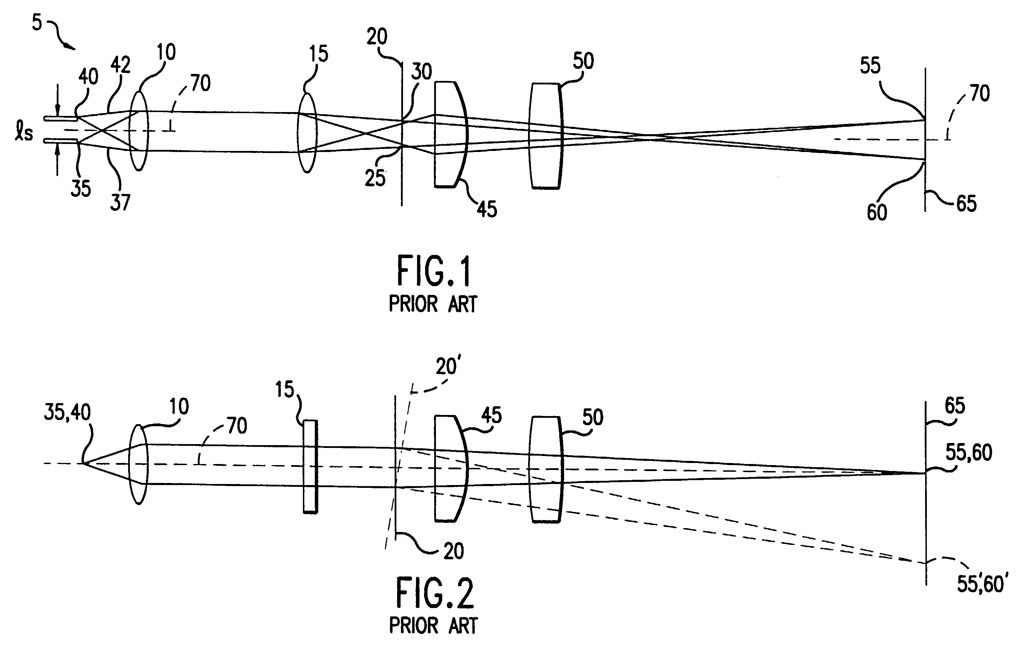

Figs. 1 and 2 are sagittal and tangential views, respectively, of a conventional dual-spot ROS system 5. Laser diodes 35, 40, which are symmetrically disposed about axis 70 and separated by a distance Is, emit laser beams 37, 42. Beams 37, 42 pass collimator lens 10 and cylindrical lens 15 and are focused to form spots 25, 30 on polygon facet 20. Facet 20 reflects spots 25, 30 through Fθ lens 45 and polygon wobble correcting element 50 to form spots 55, 60 spaced in the slow-scan direction on image plane 65, which is a photoreceptor surface. As shown in the tangential view of Fig. 2, polygon facet 20 rotates to the position indicated by dashed lines 20', for example, to scan spots 55, 60 in the fast-scan direction across photoreceptor surface 65 to positions 55', 60'.

In printing applications, lens 10 is anamorphic, that is, it has optical power only in the sagittal meridian. Magnification along the tangential meridian would produce unacceptable distortion along the scan line to be printed. More specifically, as shown in Fig. 2, lenses 10, 15 produce zero magnification along the tangential meridian, assuming the light sources are perfectly on top of each other as viewed in the tangential plane. As shown in Fig. 1, on the other hand, lenses 10, 15 do produce optical magnification along the sagittal meridian by virtue of the difference of their focal length. Anamorphic systems are discussed generally in Smith, Modern Optical Engineering, McGraw-Hill Book Company, 1966, pp. 239-241.

Although system 5 can produce theoretically perfect separation between spots 55 and 60, in practice, of course, perfect separation is very difficult if not impossible to achieve. To achieve perfect separation, the spacing Is between lasers 35, 40 must be perfect, and the positioning and focal lengths of collimator 10 and cylinder lens 15 also must be perfect. Because post-polygon magnification (between facet surface 20 and photoreceptor surface 65) is in general close to unity, incorrect positioning and focal lengths of the collimator and cylinder lenses are the major contributors to spot separation.

In producing printing and other devices that use ROS systems, even standard manufacturing tolerances can yield unacceptable scan line separation error, as described above. Reducing the tolerances, so as to yield separation error in an acceptable range, is very expensive and difficult. Even if magnification of a given lens element is changed, for instance, the positioning of the magnified image also changes, potentially necessitating a complete redesign of the geometry of the device. A need has arisen, therefore, to easily and economically reduce and/or eliminate separation error in such devices.

According to one aspect of the invention, there is provided an anamorphic zoom lens system, including means to adjust its focal length.

To address the above and other problems of ROS systems, a raster output scanning device according to the invention includes a variable focus anamorphic zoom lens system as a part of the pre-polygon optics. The variable focus system allows scan line separation to be brought within an acceptable range, preferably during manufacture of the device, without requiring unacceptably expensive lenses with extreme manufacturing tolerances and without requiring unacceptable changes in system geometry. By selectively changing the focal length of the variable focus zoom lens system, scan line separation can be adjusted easily and economically.

The invention will be described in detail with reference to the following drawings, in which like reference numerals refer to like elements, and wherein:
Fig. 1 is a sagittal view of a conventional dual spot raster output scanner;
Fig. 2 is a tangential view of the Fig. 1 scanner;
Fig. 3 is a sagittal view of a raster output scanner using a variable focus anamorphic zoom system, according to an embodiment of the invention; and
Figs. 4-5 are sagittal views of the Fig. 3 scanner showing different effective focal lengths of the variable focus anamorphic zoom system.

The disclosed anamorphic zoom lens system can be implemented in printing devices using ROS systems, such as printers, facsimile machines, electronic copiers and other such devices. With such devices, a printed image typically is transferred to a copy sheet via a charged photoreceptor. The present invention, however, is not limited to such printing devices, but is applicable to any devices requiring precise positioning of images or sections of images with respect to each other. Thus, while preferred embodiments of the invention periodically will be described with respect to printing devices, the invention is not limited to these embodiments.

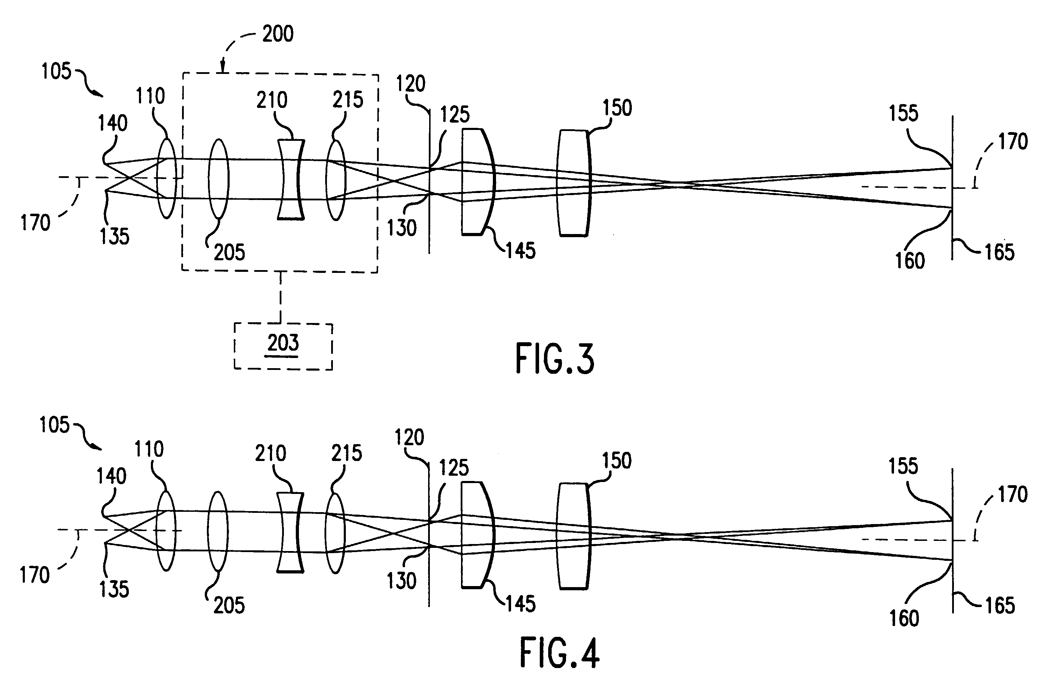

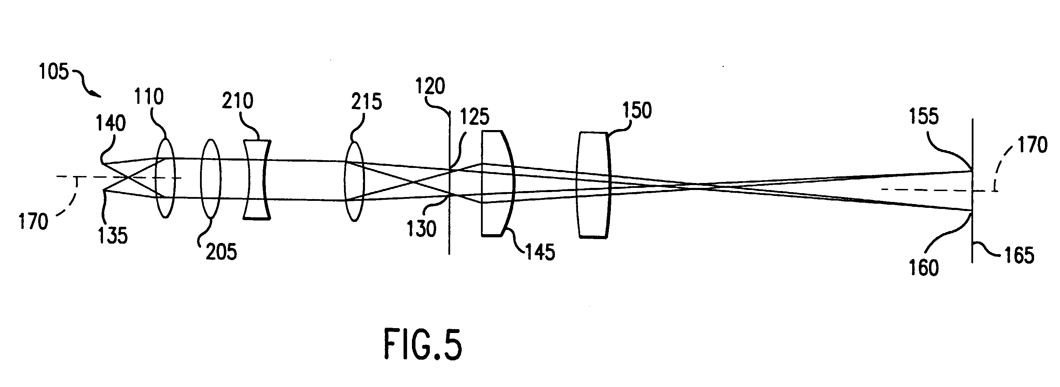

Figs. 3-5 are sagittal views of an anamorphic zoom lens system 200 disposed within a dual-spot ROS system 105. Light-emitting devices 135, 140, preferably laser diodes, emit light beams, preferably laser beams, to encounter light-transmissive optics including zoom lens system 200. Laser diodes 135, 140 preferably are symmetrically disposed about axis 170.

The beams emitted by laser diodes 135, 140 pass collimator lens 110 and zoom lens system 200 and are focused to form spots 125, 130 on a rotating reflective surface 120, such as a rotating polygon facet. Facet 120 reflects spots 125, 130 through post-polygon optics, such as Fθ lens 145 and polygon wobble correcting element 150, to form spots 155, 160 on image plane 165, which preferably is a photoreceptor surface. Spots 155, 160 are spaced along the sagittal meridian, producing scan line separation.

The zoom system illustrated in Figs. 3-5 includes three optical elements or lenses 205, 210, 215. Lenses 205, 210 and 215 preferably are cylindrical lenses. Of course, zoom system 200 can include any number of lenses greater than one. Many high resolution zoom system designs, for example, use two or more fixed position elements and yield reduced aberrations. Zoom lens systems, including mechanically compensated zoom systems, are discussed generally in Smith, Modern Optical Engineering, McGraw-Hill Book Company, 1966, pp. 241-245.

Conventional single-element or multi-element ROS systems using lenses of fixed focal length and fixed position all have the same characteristic relationship between image shift and magnification (or focal length). Thus, for an uncompensated single lens zoom system, there can be at most two magnifications at which the image is in exact focus at a given point, for example, 2 times or 0.5 times magnification. At all other powers, the image is defocused. A mechanically compensated zoom system eliminates defocusing by introducing a compensating shift of one of the other elements of the system. Since the motion of the compensating element is nonlinear, the motion often is effected by a cam arrangement, as described in Smith at page 243.

The zoom systems discussed in Smith are not anamorphic zoom systems, unlike the embodiments of the present invention. The present invention for the first time incorporates anamorphic elements into a zoom lens system, to form an anamorphic zoom system. Such an anamorphic zoom system is ideally suited for ROS applications such as printing devices. According to the embodiment of Figs. 3-5, zoom system 200 produces desired different optical magnifications along the sagittal meridian. Specifically, zoom system 200 adjusts magnification along the sagittal meridian to adjust scan line spacing, but does not adjust magnification along the tangential direction, so that no scan line distortion occurs. In other applications, including non-printing applications, change in magnification along both meridians may be acceptable.

As shown in Figs. 3-5, the motion of lens 215 is computed to hold the distance from lens 205 to the focal point at a constant value as lens 210 is moved to produce different magnification. A positioning device 203, such as a commercially available lens actuator, is coupled with zoom lens system 200 to position lenses 205, 210 and/or 215 of zoom lens system 200 as needed. Figs. 3, 4 and 5 respectively illustrate relative positions of the three lenses of zoom system 200 for nominal, long-limit and short-limit effective focal lengths. For each case, facet surface 120 reflects the light beams generated by laser diodes 135, 140 to form scan lines on photoreceptor surface 165. Adjusting the effective focal length of zoom system 200 changes the sagittal magnification, without defocusing spots 125, 130 on polygon facet 120. Consequently, the separation between scan lines 155 and 160 also changes, without defocusing the printed image. As described above, zoom system 200 can include any number of elements greater than one, not just the three elements 205, 210 and 215.

Zoom system 200 preferably is used during manufacture of device 105 to adjust scan line spacing to correct scan line separation error. In the previously described example, actual pre-polygon magnification was 11.77 instead of the desired 12.5, yielding a scan line separation error of 18.5 µm. With embodiments of the invention, the 18.5 µm error is detected, preferably during initial testing, and corrected by adjusting the positions of lenses 210 and 215. The 18.5 µm error thus can be eliminated, or at least reduced to a level at which the error can not be perceived in the printed image, without remanufacturing any of the system lenses and without repositioning any fixed lenses. Additionally, separation error caused by imperfect laser spacing can be corrected without moving lasers 135, 140, and error produced by other elements can be corrected without moving or remanufacturing the other elements. Moreover, correcting separation error with zoom system 200 occurs without defocusing spots 125, 130 on facet surface 120. Thus, facet surface 120 also does not need to be moved. Moving facet surface 120, of course, would require substantial redesign of the overall geometry of device 105.

Once separation error is reduced to an acceptable level, zoom system 200 is locked to fix the positions of lenses 205, 210 and 215. Device 105 then is ready for immediate use or for sale to an end user.

Prior art zoom systems are unacceptable for use in ROS systems such as printing devices, because prior art zoom systems are not anamorphic. Using a non-anamorphic zoom system in a ROS printing device would produce unacceptable distortion in the tangential direction, that is, in the fast-scan direction of the printed image. With anamorphic zoom system 200, however, there is no magnification in the tangential direction, and thus no distortion. Magnification changes only in the sagittal direction, allowing scan line spacing to be adjusted without distorting the scan lines themselves. Additionally, magnification can be changed without defocusing the spots on polygon surface 120 or the scan lines on photoreceptor surface 165.

While the present invention has been described with reference to specific embodiments, the description is illustrative. The invention is not to be construed as limited to the specific examples described. For example, any number of laser sources can be used, and light sources other than laser sources can be used. Further, the invention can be used in a number of different applications, not just printing applications.

## Claims

1. An anamorphic zoom lens system (200), including means (203) to adjust its focal length.

2. The system of claim 1 comprising:
optical means (205,210,215) for producing optical magnification along a sagittal meridian of the system; and
means (203) for moving the optical means to adjust the focal length of the zoom system.

3. The system of claim 2, wherein the optical means (205,210,215) comprises at least two lenses, further wherein the means for moving the optical means moves at least one of the lenses relative to another of the lenses.

4. The system of claim 3, wherein the lenses are cylindrical lenses.

5. A raster scanning optical system comprising:
at least one light-emitting device (135) that emits a light beam;
a rotating reflective surface (120) that reflects the light beam to form a scan line (160); and
the anamorphic zoom lens system (200) of any one of claims 1 to 4 positioned between the at least one light-emitting device and the reflective surface, a focal length of the anamorphic zoom system being adjustable to adjust positioning of the scan line.

6. The raster scanning optical system of claim 5, wherein the, or each, light beam forms a focussed spot (125,130) on the reflective surface (120), the spot remaining focussed while the focal length of the anamorphic zoom system is adjusted to adjust positioning of the scan line (155,160).

7. The raster scanning optical system of claim 5, comprising a plurality of light-emitting devices (135,140) that emit a plurality of light beams, the reflective surface reflecting the light beams to form a plurality of scan lines (155,160), and the focal length of the anamorphic zoom system being adjustable to adjust separation between the plurality of scan lines.

8. A laser printing apparatus including the raster scanning optical system (105) of any one of claims 5 to 7, wherein the, or each, light-emitting device (135,140) comprises a laser source that emits a laser beam, and including a photoreceptor (165) positioned to receive the scan line or lines.
